# FASCICULE DE BREVET EUROPEEN

(11) **EP 3 390 161 B1**
(45) Date de publication et mention de la délivrance du brevet: **01.07.2020**
(21) Numéro de dépôt: 16826099.0
(22) Date de dépôt: 15.12.2016
(51) Int. Cl.: B60R 13/02

(54) **DISPOSITIF POUR FIXER UN ÉLÉMENT D'HABILLAGE SUR UNE STRUCTURE DE MONTANT DE BAIE**
VORRICHTUNG ZUR BEFESTIGUNG EINES ABDECKELEMENTS AN EINER FENSTERPFOSTENSTRUKTUR
DEVICE FOR ATTACHING A COVERING ELEMENT TO A WINDOW POST STRUCTURE

(30) Priorité: 17.12.2015 FR 1562669
(43) Date de publication de la demande: 24.10.2018
(73) Titulaire: Renault S.A.S., 92100 Boulogne-Billancourt (FR)
(72) Inventeur: BOUILLON, Jean Charles, 78940 La Queue Les Yvelines (FR)
(86) Numéro de dépôt international: PCT/FR2016/053445
(87) Numéro de publication internationale: WO 2017/103488

(56) Documents cités:
- EP-A1- 1 790 537
- EP-A1- 1 935 722
- FR-A1- 2 891 516
- US-A1- 2014 008 501

## Description

L'invention concerne un dispositif pour fixer un élément d'habillage sur une structure de montant de baie dans une zone de jonction avec une garniture de pavillon dans laquelle la garniture de pavillon passe sous l'élément d'habillage de montant de baie, l'élément d'habillage du montant de baie présentant un profil courbé formé par une partie latérale et une partie frontale reliées par une partie de liaison coudée, et le dispositif comprenant une platine de fixation d'orientation sensiblement longitudinale présentant une face interne reliée à la structure de montant de baie et une face externe opposée munie:
- d'un premier moyen de fixation apte à coopérer avec un moyen d'accrochage porté par la partie latérale de l'élément d'habillage de montant de baie et d'un deuxième moyen de fixation apte à coopérer avec un moyen de réception porté par la partie coudée de l'élément d'habillage de montant de baie,
- et d'un premier moyen de plaquage de la garniture de pavillon dans la partie latérale de l'habillage du montant de baie, disposé entre les moyens de fixation, et d'un deuxième moyen de plaquage de la garniture de pavillon dans la partie frontale de l'élément d'habillage de montant de baie, le deuxième moyen de plaquage s'étendant depuis le bord avant de la platine en direction de la partie frontale de l'élément d'habillage de montant de baie.

Dans un véhicule automobile, les montants de baie sont généralement revêtus d'un élément d'habillage à l'aide d'agrafes de fixation. Dans la zone de jonction entre la garniture de pavillon et l'habillage du montant de baie, il est nécessaire que les éléments de garniture et d'habillage soient bien plaqués de façon qu'ils forment une surface unie et ne présentent pas de jeux inesthétiques nuisant à la qualité perçue du véhicule.

FR 2 891 516 - A1 divulgue un agencement d'un élément d'habillage sur une structure de montant de baie selon le préambule de la revendication 1.

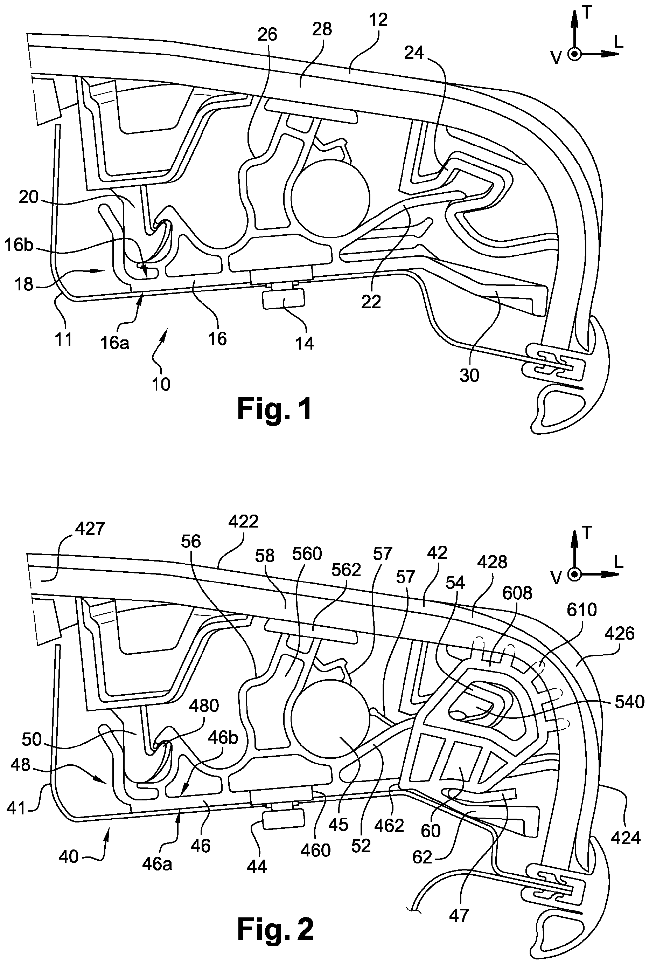

La figure 1 représente un dispositif 10 pour fixer un élément d'habillage 12 sur un élément de structure de la caisse 11 formant un montant de baie. Le dispositif 10 comporte une platine 16 de fixation dont une face interne 16a est destinée à être fixée à la structure 11 de montant de baie par un pion 14 et une face externe 16b, opposée à la face interne 16a, comporte un premier moyen de fixation 18 destiné à coopérer avec un moyen d'accrochage 20 porté par l'élément d'habillage 12 de montant de baie et un deuxième moyen de fixation 22 apte à coopérer avec un moyen de réception complémentaire 24 porté par l'élément d'habillage de montant de baie 12. La platine 16 comporte également un premier moyen de plaquage 26 d'une garniture de pavillon 28 au niveau d'une partie latérale de l'élément d'habillage 12 de montant de baie et un deuxième moyen de plaquage 30 de la garniture de pavillon 28 au niveau d'une partie frontale de l'élément d'habillage de montant de baie.

Cependant en raison de la présence du deuxième moyen de fixation, il n'y a pas de moyen plaquage dans la zone courbée située entre la partie latérale et la partie frontale de l'élément d'habillage ce qui entraine un mauvais positionnement de la garniture de pavillon par rapport à l'élément d'habillage de montant de baie. Un jeu risque alors d'apparaitre entre l'élément d'habillage et la garniture ce qui nuit à l'esthétique et à la qualité perçue de l'habitacle.

Afin de pallier ces inconvénients, l'invention a pour objet un dispositif pour fixer un élément d'habillage dans une zone de jonction avec une garniture de pavillon, qui soit esthétique, efficace, pratique et peu onéreux.

A cet effet, l'invention propose un dispositif pour fixer un élément d'habillage du type cité ci-dessus, caractérisé en ce que le dispositif comporte un troisième moyen de plaquage de la garniture de pavillon dans la partie coudée de l'élément d'habillage de montant de baie disposé sur la face externe de la platine au-dessus du deuxième moyen de fixation.

Selon d'autres caractéristiques de l'invention:
- Le troisième moyen de plaquage comporte une paroi d'appui d'orientation verticale dont le profil courbé est complémentaire de celui de la partie coudée du montant de baie.
- La paroi d'appui est reliée à la platine par l'intermédiaire d'une cloison de support sensiblement verticale avant, d'une cloison de support sensiblement verticale arrière et une cloison de support horizontale traversée de part en part par une ouverture.
- L'ouverture est ménagée à proximité de la paroi d'appui.
- La cloison de support traversée par une ouverture est en regard du deuxième moyen de fixation.
- Une face externe de la paroi d'appui est munie de nervures verticales orientées selon un plan sensiblement perpendiculaire à la surface de la garniture de pavillon en regard.
- Les nervures sont de hauteur différente.
- La patte de support comporte une nervure centrale sensiblement horizontale sur laquelle est destinée à venir en appui une sangle de sac gonflable de sécurité guidée entre le deuxième moyen de plaquage et la cloison de support avant du troisième moyen de plaquage.
- La patte de support présente un bord chanfreiné apte à permettre le guidage de la sangle de sac gonflable de sécurité.
- Le dispositif comprend un troisième moyen de plaquage disposé symétriquement de chaque côté du deuxième moyen de fixation.

D'autres caractéristiques et avantages de l'invention apparaîtront à la lecture de la description d'exemples de réalisation d'un dispositif en référence aux dessins annexés dans lesquels :
- La figure 1 est une vue en coupe de dessus d'un dispositif de fixation d'un élément d'habillage de montant de baie selon l'état de la technique.
- La figure 2 est une vue en coupe de dessus d'un dispositif de fixation d'un élément d'habillage sur un montant de baie selon l'invention.
- La figure 3 est une vue en perspective d'un détail du dispositif de la figure 2.
- La figure 4 est une vue de côté du détail de la figure 3.

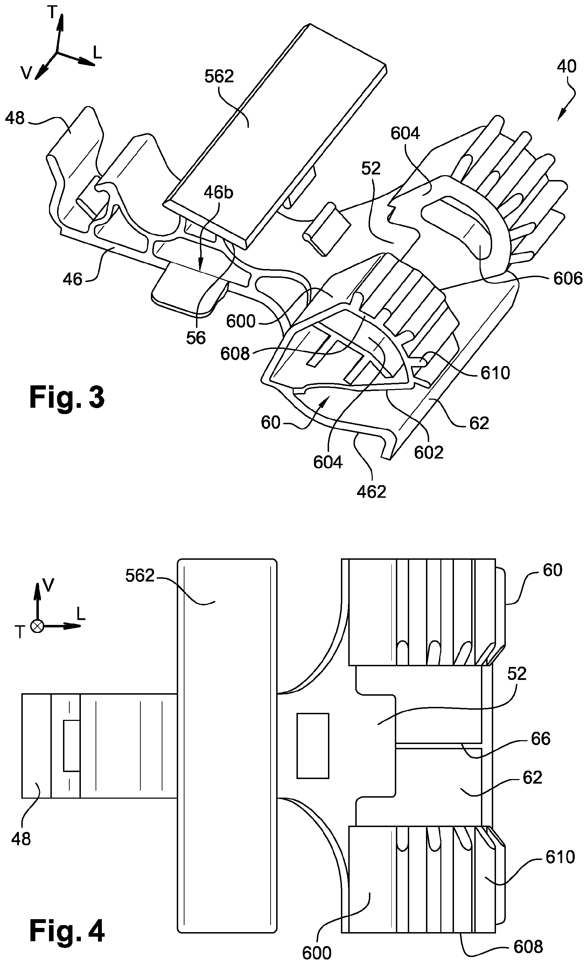

Dans la description qui suit, nous prendrons à titre non limitatif une orientation longitudinale, verticale et transversale indiquée par le trièdre L,V,T des figures 1 à 4.

Des éléments identiques ou analogues sont désignés par les mêmes chiffres de référence.

A l'exception des éléments spécifiques du poste de conduite, le véhicule présente une symétrie générale par rapport à un plan longitudinal médian.

Tel que représenté à la figure 2, un dispositif 40 permet de fixer un élément d'habillage 42 sur une structure en tôle du montant de baie 41, dans une zone de jonction du montant de baie et d'un pavillon du véhicule dans laquelle une garniture 58 du pavillon passe sous un bord supérieur de l'élément d'habillage 42. L'élément d'habillage 42 présente un profil coudé, avec une partie latérale 422 s'étendant sensiblement longitudinalement et une partie frontale 424 située en avant de la partie latérale 422 et orientée selon un plan sensiblement transversal. La partie latérale 422 et la partie frontale 424 sont reliée par une partie coudée 426.

En outre un dispositif de sac gonflable 45 est disposé entre la structure de montant de baie et l'élément d'habillage 42.

Le dispositif de fixation 40 de l'élément d'habillage 42 comporte une platine de fixation 46 s'étendant dans un plan sensiblement longitudinal.

La platine 46 présente une face interne 46a destinée à être fixée à la structure 41 du montant de baie par l'intermédiaire d'un pion 44 et une face externe 46b, opposée à la face interne 46a, comportant un premier moyen de fixation 48 destiné à coopérer avec un moyen d'accrochage 50 porté par une zone arrière 427 de la partie latérale 422 l'élément d'habillage 42 de montant de baie et un deuxième moyen de fixation 52 apte à coopérer avec un moyen de réception complémentaire 54 porté par une zone avant 428 de la partie latérale 422 de l'élément d'habillage 42, jouxtant la partie coudée 426 de l'élément d'habillage 42. Le premier moyen de fixation 48 présente la forme d'un U dont l'une des branches présente un tenon 480. Le moyen d'accrochage 50 présente la forme d'un crochet apte à être inséré sans jeu entre les branches du U de façon que le crochet coopère par encliquetage avec le tenon 480.

Le deuxième moyen de fixation 52 présente quant à lui la forme d'une languette s'étendant en saillie depuis une zone centrale 460 de la platine 46 vers l'avant et vers l'élément d'habillage 42. Le moyen de réception 54 comporte un évidement 540 apte à recevoir la languette 52.

Le deuxième moyen de fixation 52 et le premier moyen de plaquage 56 comportent chacun une lame élastique 57 de maintien du sac gonflable de sécurité 45.

La platine 46 comporte également un premier moyen de plaquage 56 de la garniture de pavillon 58 en regard de la partie latérale 420 de l'élément d'habillage 42. Le premier moyen de plaquage 56 est disposé dans la zone centrale 460 de la platine 46, entre le premier moyen de fixation 48 et le deuxième moyen de fixation 52. Le premier moyen de plaquage 56 présente la forme d'une patte 560 s'étendant selon une direction sensiblement transversale et dont une extrémité libre est munie d'une paroi d'appui 562 s'étendant selon un plan sensiblement parallèle au plan de la partie latérale 422 de l'élément d'habillage 42.

De plus, une extrémité avant 462 de la platine 46 se prolonge par une patte 62 en direction de l'avant. Cette patte de support 62 est en contact avec la structure du montant de baie 41. La patte 62 forme un deuxième moyen de plaquage de la garniture de pavillon (58) dans la zone frontale (424) de l'élément d'habillage (42). Une nervure centrale 66 d'orientation horizontale est disposée sur la patte de support 62.

La platine 46 comporte de plus un troisième moyen de plaquage 60 de la garniture de pavillon 58 au niveau de la partie coudée 426 de l'élément d'habillage 42.

Le troisième moyen de plaquage 60 est disposé au-dessus du deuxième moyen de fixation 52, en regard de l'élément d'habillage 42. Le troisième moyen de plaquage 60 et le deuxième moyen de fixation 52 sont donc sensiblement alignés selon une direction verticale.

Le troisième moyen de plaquage 60 présente une paroi arrière 600 et une paroi avant 602 orientées selon un plan sensiblement vertical et reliées par une paroi inférieure 604 d'orientation sensiblement horizontale longeant le deuxième moyen de fixation 52.

Les bords des parois arrière 600, avant 602 et inférieure 604 opposés à la surface de la platine 46 sont reliés entre eux par une paroi d'appui 608 présentant un profil courbé complémentaire de celui de la partie coudée de l'élément d'habillage 42 et du pavillon 58.

La paroi 604 s'étend le long de la patte support 62 formant le deuxième moyen de plaquage.

La paroi inférieure 604 comporte une ouverture traversante 606 localisée de préférence sur une moitié de la paroi 604 située sous la paroi 608.

La paroi d'appui 608 présente une pluralité de nervures 610 verticales orientées dans un plan sensiblement perpendiculaire à la surface du profil coudé de l'élément d'habillage 42 et de la garniture de pavillon 58.

Les nervures 610 viennent en interférence avec la garniture de pavillon 58 de façon à contraindre de la meilleure façon possible le bord de la garniture de pavillon 58 pour qu'il soit plaqué contre la face interne de la partie coudée 426 de l'élément d'habillage 42, En particulier la hauteur des nervures peut être différente et définie séparément lors de la mise au point du véhicule de façon à optimiser le plaquage. Les nervures permettent également d'assouplir la face interne de la garniture en cassant les fibres qui la composent, la garniture étant le plus souvent composée de kraft ou de toile de verre.

Par ailleurs, la présence de l'ouverture 606 dans la paroi inférieure 604 permet de conférer au deuxième moyen de plaquage 60 une certaine élasticité facilitant le montage tandis que du côté de la fixation à la structure en tôle, le dispositif est beaucoup plus rigide de façon à assurer une tenue efficace.

De façon que l'élément d'habillage 42 puisse être indifféremment utilisé sur un montant de baie gauche ou droit par une simple inversion du haut et du bas, un moyen de plaquage 60 est disposé symétriquement de chaque côté du deuxième moyen de fixation 52.

En outre, l'espace situé entre la paroi avant 604 et la patte de support 62 est destiné à recevoir une sangle 47 du sac gonflable 45. Ainsi, une tenue très souple de la sangle de sac gonflable est assurée en trois points : à l'endroit de la nervure centrale de la patte de support 62 et sur les bords d'extrémité de la patte de support 62. Ainsi le montage du sac gonflable ainsi que son déploiement en cas de choc sont facilités. De plus les bords de la patte de support 62 sont chanfreinés, ce qui évite le blocage de la sangle en cas de déploiement du sac gonflable

Le dispositif selon l'invention présente ainsi de nombreux avantages.
- La garniture de pavillon est correctement plaquée.
- Le montage du dispositif est aisé.
- L'ajout de nervures ne nécessite que des modifications mineures du moule pour l'adapter.
- La souplesse relative donnée par l'ouverture 606 ménagée dans le deuxième moyen de plaquage 60 permet d'accroitre l'interférence des nervures 610 avec la garniture de pavillon, ce qui permet au dispositif d'être moins sensible aux petites modifications apportées sur le bord de la garniture de pavillon par la mise au point de son processus de fabrication.
- Le maintien de la sangle de sac gonflable et le bon déploiement de ce dernier sont assurés.

## Revendications

1. Agencement d'un élément d'habillage (42) sur une structure de montant de baie (41), au moyen d'un dispositif de fixation (40), dans une zone de jonction avec une garniture de pavillon (58) dans laquelle la garniture de pavillon (58) passe sous l'élément d'habillage (42) de montant de baie, l'élément d'habillage (42) du montant de baie présentant un profil courbé formé par une partie latérale (422) et une partie frontale (424) reliées par une partie de liaison coudée (426), et le dispositif (40) comprenant une platine de fixation (46) d'orientation sensiblement longitudinale présentant une face interne (46a) reliée à la structure de montant de baie (41) et une face externe (46b) opposée munie:
- d'un premier moyen de fixation (48) apte à coopérer avec un moyen d'accrochage (50) porté par la partie latérale (422) de l'élément d'habillage (42) de montant de baie et d'un deuxième moyen de fixation (52) apte à coopérer avec un moyen de réception (54) porté par la partie coudée (426) de l'élément d'habillage (42) de montant de baie,
- et d'un premier moyen de plaquage (56,560,562) de la garniture de pavillon (58) dans la partie latérale (422) de l'habillage du montant de baie, disposé entre les moyens de fixation (48) et (52), et d'un deuxième moyen de plaquage (62) de la garniture de pavillon (58) dans la partie frontale (424) de l'élément d'habillage (42) de montant de baie, le deuxième moyen de plaquage (62) s'étendant depuis le bord avant (462) de la platine (46) en direction de la partie frontale (424) de l'élément d'habillage (42) de montant de baie,
**caractérisé en ce que** le dispositif (40) comporte un troisième moyen de plaquage (60) de la garniture de pavillon (58) dans la partie coudée (426) de l'élément d'habillage (42) de montant de baie disposé sur la face externe (46b) de la platine (46) au-dessus du deuxième moyen de fixation (52).

2. Agencement d'un élément d'habillage (42) sur une structure de montant de baie selon la revendication 1, **caractérisé en ce que** le troisième moyen de plaquage (60) comporte une paroi d'appui (608) d'orientation verticale dont le profil courbé est complémentaire de celui de la partie coudée (426) de l'habillage (42) de montant de baie.

3. Agencement d'un élément d'habillage (42) sur une structure de montant de baie (41) selon la revendication précédente, **caractérisé en ce que** la paroi d'appui (608) est reliée à la platine (46) par l'intermédiaire d'une cloison de support sensiblement verticale avant (602), d'une cloison de support sensiblement verticale arrière (600) et une cloison de support horizontale (604) traversée de part en part par une ouverture (606).

4. Agencement d'un élément d'habillage (42) sur une structure de montant de baie (41) selon la revendication précédente, **caractérisé en ce que** l'ouverture (606) est ménagée à proximité de la paroi d'appui (608).

5. Agencement d'un élément d'habillage (42) sur une structure de montant de baie (41) selon la revendication 3 ou 4, **caractérisé en ce que** la cloison de support (604) traversée par une ouverture (606) est en regard du deuxième moyen de fixation (52).

6. Agencement d'un élément d'habillage (42) sur une structure de montant de baie (41) selon l'une des revendications 2 à 5, **caractérisé en ce qu'**une face externe de la paroi d'appui (608) est munie de nervures verticales (610) orientées selon un plan sensiblement perpendiculaire à la surface de la garniture de pavillon (58) en regard.

7. Agencement d'un élément d'habillage (42) sur une structure de montant de baie (41) selon la revendication précédente, **caractérisé en ce que** les nervures (610) sont de hauteur différente.

8. Agencement d'un élément d'habillage (42) sur une structure de montant de baie selon l'une des revendications 5 à 7, **caractérisé en ce que** le deuxième moyen de plaquage (62) comporte une nervure centrale sensiblement horizontale sur laquelle est destinée à venir en appui une sangle (47) de sac gonflable de sécurité (45) guidée entre le deuxième moyen de plaquage (52) et la cloison de support avant (602) du troisième moyen de plaquage (60).

9. Agencement d'un élément d'habillage (42) sur une structure de montant de baie (41) selon la revendication précédente, **caractérisé en ce que** le deuxième moyen de plaquage (62) présente un bord chanfreiné apte à permettre le guidage de la sangle (47) de sac gonflable de sécurité.

10. Agencement d'un élément d'habillage (42) sur une structure de montant de baie (41) selon la revendication 1, **caractérisé en ce qu'**il comprend un troisième moyen de plaquage (60) disposé symétriquement de chaque côté du deuxième moyen de fixation (52).

## Patentansprüche

1. Anordnung eines Verkleidungselements (42) auf einer Fenstersäulenstruktur (41) mittels einer Befestigungsvorrichtung (40) in einem Verbindungsbereich mit einem Dachhimmel (58), wobei der Dachhimmel (58) unter dem Fenstersäule-Verkleidungselement (42) hindurchgeht, wobei das Verkleidungselement (42) der Fenstersäule ein gekrümmtes Profil aufweist, das von einem Seitenteil (422) und einem Frontteil (424) geformt wird, die durch einen gebogenen Verbindungsteil (426) verbunden sind, und die Vorrichtung (40) eine Befestigungsplatte (46) mit im Wesentlichen Längsausrichtung enthält, die eine mit der Fenstersäulenstruktur (41) verbundene Innenseite (46a) und eine gegenüberliegende Außenseite (46b) aufweist, versehen mit:
- einer ersten Befestigungseinrichtung (48), die mit einer vom Seitenteil (422) des Fenstersäule-Verkleidungselements (42) getragenen Einhakeinrichtung (50) zusammenwirken kann, und einer zweiten Befestigungseinrichtung (52), die mit einer vom gebogenen Teil (426) des Fenstersäule-Verkleidungselements (42) getragenen Aufnahmeeinrichtung (54) zusammenwirken kann,
- und einer ersten Andrückeinrichtung (56, 560, 562) des Dachhimmels (58) im Seitenteil (422) der Verkleidung der Fenstersäule, die zwischen den Befestigungseinrichtungen (48) und (52) angeordnet ist, und einer zweiten Andrückeinrichtung (62) des Dachhimmels (58) im Frontteil (424) des Fenstersäule-Verkleidungselements (42), wobei die zweite Andrückeinrichtung (62) sich vom vorderen Rand (462) der Platte (46) in Richtung des Frontteils (424) des Fenstersäule-Verkleidungselements (42) erstreckt, **dadurch gekennzeichnet, dass** die Vorrichtung (40) eine dritte Andrückeinrichtung (60) des Dachhimmels (58) im gebogenen Teil (426) des Fenstersäule-Verkleidungselements (42) aufweist, die an der Außenseite (46b) der Platte (46) oberhalb der zweiten Befestigungseinrichtung (52) angeordnet ist.

2. Anordnung eines Verkleidungselements (42) auf einer Fenstersäulenstruktur nach Anspruch 1, **dadurch gekennzeichnet, dass** die dritte Andrückeinrichtung (60) eine Auflagewand (608) senkrechter Ausrichtung aufweist, deren gekrümmtes Profil zu demjenigen des gebogenen Teils (426) der Fenstersäule-Verkleidung (42) komplementär ist.

3. Anordnung eines Verkleidungselements (42) auf einer Fenstersäulenstruktur (41) nach dem vorhergehenden Anspruch, **dadurch gekennzeichnet, dass** die Auflagewand (608) mit der Platte (46) mittels einer vorderen im Wesentlichen senkrechten Stütztrennwand (602), einer hinteren im Wesentlichen senkrechten Stütztrennwand (600) und einer waagrechten Stütztrennwand (604) verbunden ist, die von einer Seite zur anderen von einer Öffnung (606) durchquert wird.

4. Anordnung eines Verkleidungselements (42) auf einer Fenstersäulenstruktur (41) nach dem vorhergehenden Anspruch, **dadurch gekennzeichnet, dass** die Öffnung (606) in der Nähe der Auflagewand (608) ausgespart ist.

5. Anordnung eines Verkleidungselements (42) auf einer Fenstersäulenstruktur (41) nach Anspruch 3 oder 4, **dadurch gekennzeichnet, dass** die von einer Öffnung (606) durchquerte Stütztrennwand (604) der zweiten Befestigungseinrichtung (52) gegenüberliegt.

6. Anordnung eines Verkleidungselements (42) auf einer Fenstersäulenstruktur (41) nach einem der Ansprüche 2 bis 5, **dadurch gekennzeichnet, dass** eine Außenseite der Auflagewand (608) mit senkrechten Rippen (610) versehen ist, die gemäß einer Ebene im Wesentlichen lotrecht zur gegenüberliegenden Fläche des Dachhimmels (58) ausgerichtet sind.

7. Anordnung eines Verkleidungselements (42) auf einer Fenstersäulenstruktur (41) nach dem vorhergehenden Anspruch, **dadurch gekennzeichnet, dass** die Rippen (610) unterschiedliche Höhen haben.

8. Anordnung eines Verkleidungselements (42) auf einer Fenstersäulenstruktur nach einem der Ansprüche 5 bis 7, **dadurch gekennzeichnet, dass** die zweite Andrückeinrichtung (62) eine im Wesentlichen waagrechte mittlere Rippe aufweist, auf der ein Gurtband (47) eines Airbags (45) in Auflage kommen soll, das zwischen der zweiten Andrückeinrichtung (52) und der vorderen Stütztrennwand (602) der dritten Andrückeinrichtung (60) geführt wird.

9. Anordnung eines Verkleidungselements (42) auf einer Fenstersäulenstruktur (41) nach dem vorhergehenden Anspruch, **dadurch gekennzeichnet, dass** die zweite Andrückeinrichtung (62) einen abgeschrägten Rand aufweist, der die Führung des Gurtbands (47) des Airbags erlauben kann.

10. Anordnung eines Verkleidungselements (42) auf einer Fenstersäulenstruktur (41) nach Anspruch 1, **dadurch gekennzeichnet, dass** sie eine dritte Andrückeinrichtung (60) enthält, die symmetrisch auf beiden Seiten der zweiten Befestigungseinrichtung (52) angeordnet ist.

## Claims

1. Arrangement of a trim element (42) on a window pillar structure (41), by means of a fastening device (40), in a zone for joining to a roof lining (58) in which the roof lining (58) passes beneath the window pillar trim element (42), the trim element (42) of the window pillar having a curved profile formed by a lateral part (422) and a frontal part (424) that are connected by a bent linking part (426), and the device (40) comprising a fastening plate (46) with a substantially longitudinal orientation, having an inner face (46a) connected to the window pillar structure (41) and an opposite outer face (46b) provided:
- with a first fastening means (48) that is able to cooperate with a catching means (50) carried by the lateral part (422) of the window pillar trim element (42) and with a second fastening means (52) that is able to cooperate with a receiving means (54) carried by the bent part (426) of the window pillar trim element (42),
- and with a first means (56, 560, 562) for pressing the roof lining (58) into the lateral part (422) of the trim of the window pillar, disposed between the fastening means (48) and (52), and with a second means (62) for pressing the roof lining (58) into the frontal part (424) of the window pillar trim element (42), the second pressing means (62) extending from the front edge (462) of the plate (46) in the direction of the frontal part (424) of the window pillar trim element (42), **characterized in that** the device (40) has a third means (60) for pressing the roof lining (58) into the bent part (426) of the window pillar trim element (42), disposed on the outer face (46b) of the plate (46) above the second fastening means (52).

2. Arrangement of a trim element (42) on a window pillar structure according to Claim 1, **characterized in that** the third pressing means (60) has a bearing wall (608) with a vertical orientation, of which the curved profile is complementary to that of the bent part (426) of the window pillar trim (42).

3. Arrangement of a trim element (42) on a window pillar structure (41) according to the preceding claim, **characterized in that** the bearing wall (608) is connected to the plate (46) by way of a substantially vertical front supporting partition (602), a substantially vertical rear supporting partition (600) and a horizontal supporting partition (604) that has an opening (606) passing all the way through it.

4. Arrangement of a trim element (42) on a window pillar structure (41) according to the preceding claim, **characterized in that** the opening (606) is provided in the vicinity of the bearing wall (608).

5. Arrangement of a trim element (42) on a window pillar structure (41) according to Claim 3 or 4, **characterized in that** the supporting partition (604) that has an opening (606) passing through it faces the second fastening means (52).

6. Arrangement of a trim element (42) on a window pillar structure (41) according to one of Claims 2 to 5, **characterized in that** an outer face of the bearing wall (608) is provided with vertical ribs (610) that are oriented in a plane substantially perpendicular to the surface of the facing roof lining (58).

7. Arrangement of a trim element (42) on a window pillar structure (41) according to the preceding claim, **characterized in that** the ribs (610) have different heights.

8. Arrangement of a trim element (42) on a window pillar structure according to one of Claims 5 to 7, **characterized in that** the second pressing means (62) has a substantially horizontal central rib on which a strap (47) for an airbag (45) is intended to come to bear, said strap (47) being guided between the second pressing means (52) and the front supporting partition (602) of the third pressing means (60).

9. Arrangement of a trim element (42) on a window pillar structure (41) according to the preceding claim, **characterized in that** the second pressing means (62) has a chamfered edge that is able to allow the guidance of the airbag strap (47).

10. Arrangement of a trim element (42) on a window pillar structure (41) according to Claim 1, **characterized in that** it comprises a third pressing means (60) disposed symmetrically on either side of the second pressing means (52) .
